## Europäisches Patentamt
## European Patent Office
## Office européen des brevets

(19)

(11) Veröffentlichungsnummer: **0 489 288 B1**

(12) # EUROPÄISCHE PATENTSCHRIFT

(45) Veröffentlichungstag der Patentschrift: **25.01.95**

(21) Anmeldenummer: **91119431.4**

(22) Anmeldetag: **14.11.91**

(51) Int. Cl.6: **C08F 285/00**, C08F 2/22,
C08L 27/06, //(C08F285/00,
220:14),(C08L27/06,51:00)

(54) **Mehrstufiges Pfropfcopolymerisat und seine Verwendung zur Herstellung von PVC-Formmassen.**

(30) Priorität: **24.11.90 DE 4037439**

(43) Veröffentlichungstag der Anmeldung:
**10.06.92 Patentblatt 92/24**

(45) Bekanntmachung des Hinweises auf die
Patenterteilung:
**25.01.95 Patentblatt 95/04**

(84) Benannte Vertragsstaaten:
**BE DE ES FR GB IT NL SE**

(56) Entgegenhaltungen:
**EP-A- 0 379 086**
**DE-A- 2 728 618**
**DE-A- 3 843 371**
**DE-C- 2 244 519**
**US-A- 3 458 603**

(73) Patentinhaber: **BASF Aktiengesellschaft**
**Carl-Bosch-Strasse 38**
**D-67063 Ludwigshafen (DE)**

(72) Erfinder: **Goertz, Hans-Helmut, Dr.**
**Am Wurmberg 11**
**W-6713 Freinsheim (DE)**
Erfinder: **Nolte, Rainer, Dr.**
**Brechlochstrasse 9**
**W-6700 Ludwigshafen (DE)**
Erfinder: **Hatzmann, Guenter, Dr.**
**In der Taesch 23**
**W-6906 Leimen (DE)**
Erfinder: **Oschmann, Werner, Dr.**
**Buergermeister-Horlacher-Strasse 44**
**W-6700 Ludwigshafen (DE)**

**Beschreibung**

Die Erfindung betrifft Pfropfcopolymerisate, erhältlich durch

A) Emulsionspolymerisation von 5 bis 20 Gew.-% eines Monomerengemisches aus

$a_1$) 60-79 Gew.-% mindestens eines vinylaromatischen Monomeren

$a_2$) 21-40 Gew.-% mindestens eines ethylenisch ungesättigten Nitrils

$a_3$) 0-10 Gew.-% mindestens eines zwei- oder mehrfach ethylenisch ungesättigten Monomeren

$a_4$) 0-5 Gew.-% mindestens eines weiteren Monomeren,

B) anschließende Emulsionspolymerisation in Gegenwart des nach Stufe A) erhaltenen Emulsionspolymerisats von 50-75 Gew.-% eines Monomerengemisches aus

$b_1$) 75-100 Gew.-% mindestens eines konjugierten Diens

$b_2$) 0-25 Gew.-% mindestens eines vinylaromatischen Monomeren oder ungesättigten Nitrils

$b_3$) 0-10 Gew.-% mindestens eines zwei- oder mehrfach ethylenisch ungesättigten Monomeren mit mindestens zwei isolierten Doppelbindungen

$b_4$) 0-5 Gew.-% mindestens eines weiteren Monomeren,

C) anschließende Emulsionspolymerisation in Gegenwart des nach Stufe B) erhaltenen Emulsionspolymerisats von 5-45 Gew.-% eines Monomerengemisches aus

$c_1$) 40-80 Gew.-% mindestens eines vinylaromatischen Monomeren

$c_2$) 5-35 Gew.-% mindestens eines ethylenisch ungesättigten Nitrils

$c_3$) 0-35 Gew.-% mindestens eines $C_1$-$C_{18}$-Alkylmethacrylats

$c_4$) 0-10 Gew.-% mindestens eines zwei- oder mehrfach ethylenisch ungesättigten Monomeren

$c_5$) 0-25 Gew.-% mindestens eines $C_1$-$C_{18}$-Alkylacrylats und

D) anschließende Emulsionspolymerisation in Gegenwart des nach Stufe C) erhaltenen Emulsionspolymerisats von 0-5 Gew.-% eines Monomerengemisches aus

$d_1$) 60-100 Gew.-% mindestens eines $C_1$-$C_4$-Alkylmethacrylats

$d_2$) 0-5 Gew.-% mindestens eines zwei- oder mehrfach ethylenisch ungesättigten Monomeren,

$d_3$) 0-40 Gew.-% mindestens eines weiteren Monomeren

wobei sich die Gewichtsprozente der in den Stufen A) bis D) eingesetzten Monomerengemische auf das Pfropfcopolymerisat beziehen und sich auf 100 Gew.-% addieren.

Weiterhin betrifft die Erfindung thermoplastische Formmassen, welche die Pfropfcopolymerisate enthalten.

Die Schlagzähigkeit von Polyvinylchlorid kann bekannterweise durch Zusatz von Pfropfcopolymerisaten erhöht werden. Besonders geeignete Pfropfcopolymerisate sind z.B. in der DE-C-22 44 519 und DE-A-38 43 371 beschrieben. Bei diesen Pfropfcopolymerisaten besteht der Kern aus einem Monomeren mit einer Glasübergangstemperatur deutlich über 0°C. Auf diesen "harten Kern" sind eine kautschukartige Hülle und weitere harte Hüllen aufpolymerisiert. Die Transparenz der so schlagzäh modifizierten Polyvinylchloridformmassen ist jedoch noch unbefriedigend. Bei dem aus der DE-A-38 43 371 bekannten Pfropfcopolymerisat wurde versucht durch Begrenzung des Durchmessers des Kerns auf 50 nm die optischen Eigenschaften zu verbessern. Durch die sich ergebenden geringen Teilchendurchmesser wird jedoch die Schlagzähigkeit beeinträchtigt. Des weiteren zeigen die Formteile noch einen unerwünschten Blauschimmer.

Aufgabe der vorliegenden Erfindung waren daher Pfropfcopolymerisate, welche die Schlagzähigkeit von Polyvinylchloridformmassen verbessern, ohne daß sich die Transparenz, insbesondere durch Auftreten eines Blauschimmers, verschlechtert.

Demgemäß wurden die eingangs definierten Pfropfcopolymerisate gefunden.

Die erfindungsgemäßen Pfropfcopolymerisate sind erhältlich durch Emulsionspolymerisation in mehreren Stufen.

In Stufe A) wird bevorzugt ein Monomerengemisch aus

$a_1$) 60-78,90 Gew.-% eines vinylaromatischen Monomeren

$a_2$) 21-39,9 Gew.-% eines ethylenisch ungesättigten Nitrils

$a_3$) 0,1-10 Gew.-% eines zwei- oder mehrfach ethylenisch ungesättigten Monomeren und

$a_4$) 0-5 Gew.-% eines weiteren Monomeren

eingesetzt.

Der Gewichtsanteil des Monomerengemischs in der Stufe A) am gesamten Pfropfcopolymerisat beträgt bevorzugt 5-15 Gew.-%.

In der Stufe B) wird bevorzugt ein Monomerengemisch aus

$b_1$) 75-94,9 Gew.-% mindestens eines konjugierten Diens

$b_2$) 5-24,9 Gew.-% mindestens eines vinylaromatischen Monomeren oder eines ungesättigten Nitrils, besonders bevorzugt eines vinylaromatischen Monomeren

$b_3$) 0,1-10 Gew.-% mindestens eines zwei- oder mehrfach ungesättigten Monomeren mit mindestens zwei isolierten Doppelbindungen

$b_4$) 0-5 Gew.-% mindestens eines weiteren Monomeren

eingesetzt.

Der Gewichtsanteil des Monomerengemischs in der Stufe B) am gesamten Pfropfcopolymerisat beträgt bevorzugt 55-75 Gew.-%.

In der Stufe C) wird bevorzugt ein Monomerengemisch aus

$c_1$) 50-80 Gew.-% mindestens eines vinylaromatischen Monomeren

$c_2$) 5-35 Gew.-% mindestens eines ethylenisch ungesättigten Nitrils

$c_3$) 0-35 Gew.-%, insbesondere 5 bis 35 Gew.-% mindestens eines $C_1$-$C_{18}$-Alkylmethacrylats

$c_4$) 0,1-10 Gew.-% mindestens eines zwei- oder mehrfach ethylenisch ungesättigten Monomeren und

$c_5$) 0-25 Gew.-% mindestens eines $C_1$-$C_{18}$-Alkylacrylats

eingesetzt.

Der Gewichtsanteil des Monomerengemischs in der Stufe C) am gesamten Pfropfcopolymerisat beträgt bevorzugt 10 bis 40 Gew.-%.

Durch eine zusätzliche äußere Stufe D) aus überwiegend $C_1$-$C_4$-Alkylmethacrylaten, welche bevorzugt überwiegend, besonders bevorzugt zu 100 Gew.-% aus Methylmethacrylat besteht, kann gegebenenfalls die Verträglichkeit des Pfropfcopolymerisats mit Polyvinylchlorid verbessert werden.

Als vinylaromatische Monomere eignen sich Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol.

Besonders bevorzugt ist Styrol.

Als ethylenisch ungesättigte Nitrile kommen besonders Acrylnitril und (Meth)acrylnitril in Betracht.

Als konjugiertes Dien ist Butadien besonders bevorzugt. Daneben kommen beispielsweise Isopren und Chloropren in Betracht.

Bevorzugte Alkylmethacrylate sind $C_1$-$C_4$-Alkylmethacrylate, insbesondere Methylmethacrylat.

Unter den Alkylacrylaten sind die $C_1$-$C_{12}$-Alkylacrylate, z.B. Methylacrylat, Ethylacrylat, Butylacrylat, 2-Ethylhexylacrylat, Laurylacrylat, von besonderer Bedeutung.

Als vernetzend wirkende zwei- oder mehrfach ethylenisch ungesättigte Monomere mit mindestens zwei isolierten Doppelbindungen sind z.B. Allyl-, Methallyl- und Vinylester von Di-, Tri- oder höheren Carbonsäuren wie z.B. Adipinsäuredivinylester, Phthalsäurediallylester, Maleinsäurediallylester, Fumarsäurediallylester; Allyl-, Methallyl- und Vinylether mehrfunktioneller Alkohole wie Ethylenglykoldivinylether, 1,3-Butandioldivinylether, 1,4-Butandioldivinylether, Pentaerythrittriallylether; Ester der Acryl- oder Methacrylsäure mit mehrwertigen Alkoholen wie Ethylenglykoldi(meth)acrylat, 1,2-Propandioldi(meth)acrylat, 1,3-Propandioldi(meth)-acrylat, 1,3-Butandioldi(meth)acrylat, 1,4-Butandioldi(meth)acrylat, Oligo- oder Polyethylenglykoldi(meth)-acrylat; Divinylbenzol oder Mischungen der genannten Substanzen geeignet. Bevorzugt sind zweifach ungesättigte Monomere, insbesondere Divinylbenzol sowie 1,3-Butandioldi(meth)acrylat und 1,4-Butandioldi-(meth)acrylat.

Weitere Monomere können z.B. Vinylether wie Vinylisobutylether sowie Vinylester wie Vinylacetat oder Vinylpropionat sein. In den Stufen A und B kommen als weitere Monomere auch die obengenannten Alkyl-(meth)acrylate in Betracht. Der Einsatz weiterer Monomere ist für eine Verbesserung der Schlagzähigkeit und Transparenz nicht notwendig, kann jedoch in einigen Fällen vorteilhaft sein.

Die Herstellung der Pfropfcopolymerisate erfolgt durch Emulsionspolymerisation.

Als Emulgatoren dienen z.B. Natrium-, Kalium- oder Ammoniumsalze von gesättigten oder ungesättigten $C_8$-$C_{20}$-Fettsäuren wie Laurinsäure, Stearinsäure, Palmitinsäure, Ölsäure u.a., $C_8$-$C_{20}$-Alkylsulfonsäuren, Schwefelsäure-$C_8$-$C_{20}$-alkylestern, Alkylbenzolsulfonsäuren, Abiethinsäure und deren Derivaten, Sulfobernsteinsäurealkylestern, alkylierten Diphenylethersulfonsäuren.

Durch die Wahl von Art und Menge des Emulgators kann in bekannter weise die Teilchengröße der Emulsion eingestellt werden. Sie kann zwischen 50 und 300 nm liegen. Bevorzugt liegt sie im Bereich von 70 bis 200 nm, besonders bevorzugt zwischen 70 und 150 nm. Durch die Teilchengröße werden sowohl die optischen Eigenschaften (Transparenz, Opaleszenz) als auch die mechanischen Eigenschaften (Schlagzähigkeit) beeinflußt.

Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, tert.-Butylhydroperoxid, tert.-Butylperacetat in Kombination mit Reduktionsmitteln wie Natriumformaldehydsulfoxylat oder Ascorbinsäure in Gegenwart von Eisensalzen in Frage. Auch die genannten Persulfate können in Kombination mit Reduktionsmitteln wie Natrium- oder Kaliummetabisulfit in Redoxsystemen eingesetzt werden.

Die Polymerisationstemperatur liegt im allgemeinen zwischen 10 und 100°C, bevorzugt bei 50 bis 90°C.

Es werden zunächst die Monomeren der Stufe A) polymerisiert. Danach werden die Monomeren der weiteren Stufen B)-D) zur wäßrigen Emulsion gegeben. Die Monomeren in den einzelnen Stufen werden zu mehr als 70 Gew.-%, bevorzugt zu mehr als 95 Gew.-%, besonders bevorzugt zu mehr als 99 Gew.-% auspolymerisiert, bevor mit der Zugabe der Monomeren einer weiteren Stufe begonnen wird.

Der Feststoffgehalt der Emulsionen beträgt bevorzugt 30 bis 60 Gew.-%.

Das Pfropfcopolymerisat kann aus der Emulsion bzw. Dispersion in bekannter Weise z.B. durch Fällung oder Sprühtrocknung isoliert und mit einem Thermoplasten und gegebenenfalls weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Wärmeformbeständigkeit und Schlagzähigkeit nach bekannten Verfahren in Extrudern, Knetern oder Walzen gemischt werden.

Die thermoplastischen Formmassen enthalten geeigneterweise 2-40 Gew.-%, insbesondere 5-30 Gew.-% der erfindungsgemäßen Pfropfcopolymerisate.

Die Pfropfcopolymerisate sind insbesondere als Modifizierungsmittel für Formmassen auf Basis von Polyvinylhalogeniden geeignet.

Bevorzugt sind daher thermoplastische Formmassen, enthaltend

60-98 Gew.-%, vorzugsweise 70-95 Gew.-% eines Polyvinylhalogenids und

2-40 Gew.-%, vorzugsweise 5 bis 30 Gew.-% des Pfropfcopolymerisats.

Als Polyvinylhalogenid sind vor allem Homo- und Copolymere des Vinylchlorids mit mindestens 80 Gew.-% Vinylchlorideinheiten oder nachchloriertes Polyvinylchlorid geeignet.

Besonders bevorzugt ist Polyvinylchlorid.

Die Verarbeitung der Formmassen erfolgt durch für Thermoplaste übliche Methoden (Extrudieren, Spritzgießen, Kalandrieren, Pressen oder Tiefziehen).

Es werden Formteile erhalten, die eine sehr gute Schlagzähigkeit aufweisen und eine hohe Transparenz besitzen.

Beispiele

Herstellung der Pfropfcopolymerisate

Beispiel 1a

In einem mit Rührung, Heizung/Kühlung und geeigneten Dosiervorrichtungen ausgestatteten Rührkessel wurde folgende Mischung bereitet: 12 l Wasser, 96 g eines handelsüblichen Natriumalkylsulfonates (mittlere Kettenlänge $C_{12}$-$C_{14}$), 5 g Natriumhydrogencarbonat und 1,3 g Tetranatriumpyrophosphat.

Stufe A:

Die Vorlage wurde unter Rühren auf 80°C aufgeheizt, dann eine Lösung von 11,5 g Natriumperoxodisulfat in 500 ml Wasser zugegeben. Hierauf wurde innerhalb von 30 min bei 80°C eine Mischung aus 1,35 kg Styrol, 0,6 kg Acrylnitril und 100 g Butandiol-1,4-diacrylat gleichmäßig zudosiert und noch 2 h bei 80°C gehalten.

Stufe B:

Als Zulaufmischung diente hier eine Emulsion bestehend aus 8,3 kg Wasser, 96 g Emulgator (s.o.), 25 g Natriumhydrogencarbonat, 6 g Tetranatriumpyrophosphat, 1,9 kg Styrol, 11,3 kg Butadien und 105 g Butandiol-1,4-diacrylat. Zu der in Stufe A erhaltene Dispersion wurde bei nach wie vor 80°C eine Lösung von 11,5 g Natriumperoxodisulfat in 500 ml Wasser sowie 5 l der Zulaufmischung zugefügt. Nach 15 min wurde der Rest der Zulaufmischung und parallel dazu eine Lösung von 35 g Natriumperoxodisulfat in 1,5 l Wasser innerhalb von 6 h gleichmäßig zudosiert und noch 4 h bei 80°C nachgerührt.

Stufe C:

Zu der erhaltenen Dispersion wurden 100 g Emulgator (s.o.) sowie eine Lösung von 22 g Natriumperoxodisulfat in 1 l Wasser zugegeben. Danach wurde bei weiterhin 80°C eine Mischung bestehend aus 2,5 kg Styrol, 1,0 kg Acrylnitril, 1,45 kg Methylmethacrylat und 50 g Butandiol-1,4-diacrylat innerhalb von zwei Stunden zudosiert und noch weitere 2 h bei dieser Temperatur nachgerührt.

Die erhaltene Dispersion des Pfropfcopolymerisats wies einen Feststoffgehalt von 45,1 Gew.-% und einen pH-Wert von 7,7 auf. Die mittlere Teilchengröße betrug 110 nm.

Beispiele 1b-e und Vergleichsbeispiel A (gemäß Bsp. 1 aus DE-A-38 43 371)

Die Dispersionen wurden analog zu Beispiel 1a hergestellt (Zusammensetzung lt. Tab. 1).

Die Dispersionen wurden jeweils mit 40 g eines handelsüblichen Stabilisators (Octadecyl-$\beta$-(4'-hydroxy-3',5'-di-tert.-butylphenyl)propionat) in dispergierter Form versetzt und in üblicher Art und Weise sprühgetrocknet.

Herstellung der thermoplastischen Formmassen

90 g Suspensions-PVC, K-Wert 57
10 g Pfropfcopolymerisat
1 g Stabilisator (Di-n-octylzinn-bis-thioglykolsäureisooctylester)
wurden bei 165°C 8 min lang in einem Walzwerk gemischt. Die so erhaltenen Mischungen wurden bei 170°C unter folgenden Bedingungen zu Platten gepreßt:
10 min vorheizen bei 1 bar
3 min pressen bei 50 bar
2 min pressen bei 200 bar
5 min kühlen bei 200 bar

Mechanische und optische Eigenschaften

Durchlicht und Streulicht wurden an 4 mm dicken Preßplatten mit Hilfe der Ulbricht-Kugel, die Transmission bei 400 nm an 1 mm dicken Preßplatten mit Hilfe eines Spektralphotometers gegen eine entsprechende unmodifizierte PVC-Platte ermittelt (Tabelle 2).

Die Schlagzähigkeit wurde nach
DIN 53 449 (Schlagzugzähigkeit) und nach
ISO 180/1A (Schlagbiegeprüfung)
bestimmt.

Bei der Messung der IZOD-Schlagzähigkeit nach ISO 180/1A wurde neben der Schlagzähigkeit registriert, ob die Probekörper durchgebrochen (Sprödbruch) oder nur geknickt (Zähbruch) waren. In Tabelle 3 ist in Klammern angegeben, wieviele von 10 Probekörpern nicht gebrochen sind (Zähbruch).

Tabelle 1

Zusammensetzung der Pfropfcopolymerisate
S = Styrol, A = Acrylnitril, B = Butadien, BA = n-Butylacrylat
MMA = Methylmethacrylat, V = Vernetzer (Butandiol-1,4-diacrylat)

| Beispiel | Teile | | Zusammensetzung der Stufe | | | | | |
|----------|-------|-----------|----|----|----|----|-----|---|
| | | | S | A | B | BA | MMA | V |
| 1a | 10 | Stufe A | 66 | 29 | – | – | – | 5 |
| | 65 | Stufe B | 14 | – | 85 | – | – | 1 |
| | 25 | Stufe C | 50 | 20 | – | – | 29 | 1 |
| 1b | 10 | Stufe A | 66 | 29 | – | – | – | 5 |
| | 65 | Stufe B | 14 | – | 85 | – | – | 1 |
| | 25 | Stufe C | 70 | 10 | – | – | 19 | 1 |
| 1c | 10 | Stufe A | 66 | 29 | – | – | – | 5 |
| | 65 | Stufe B | 14 | – | 85 | – | – | 1 |
| | 25 | Stufe C | 70 | 10 | – | 15 | 4 | 1 |
| 1d | 10 | Stufe A | 66 | 29 | – | – | – | 5 |
| | 65 | Stufe B | 14 | – | 85 | – | – | 1 |
| | 25 | Stufe C | 75 | 5 | – | – | 14 | 1 |
| 1e | 10 | Stufe A | 66 | 29 | – | – | – | 5 |
| | 65 | Stufe B | 14 | – | 85 | – | – | 1 |
| | 25 | Stufe C | 65 | 33 | – | – | – | 2 |
| A | 9 | Stufe A | 98 | – | – | – | – | 2 |
| | 51 | Stufe B | 18 | – | 81 | – | – | 1 |
| | 35 | Stufe C/1 | 50 | 17 | – | 26 | 6 | 1 |
| | 5 | Stufe C/2 | – | – | – | – | 99 | 1 |

Tabelle 2

| Beispiel | Vicat A [°C] | Transparenz | | Transmission 400 nm [%] |
|---|---|---|---|---|
| | | Durchl. [%] | Streulicht [%] | |
| 1a | 100 | 83,4 | 12,2 | 81 |
| 1b | 96 | 86,4 | 9,9 | 83 |
| 1c | 81 | 86,3 | 10,3 | 87 |
| 1d | 90 | 86,5 | 10,9 | 87 |
| 1e | 115 | 85,1 | 9,5 | 77 |
| A | 79 | 86,2 | 11,0 | 54 |

Tabelle 3

Schlagfestigkeit [kJ/mm2]

B = Bruch, o.B. = ohne Bruch

in Klammer jeweils Anzahl der Probekörper ohne Bruch (von 10)

| Beispiel | Schlagzugzähigkeit DIN 53 448 | | Schlagbiegeprüfung ISO 180/1A | | |
|---|---|---|---|---|---|
| | längs | quer | B. | o.B. | |
| 1a | 706 | 685 | | 70 | (10) |
| 1b | 655 | 614 | 43 | 55–73 | ( 4) |
| 1c | 684 | 633 | | 81 | (10) |
| 1d | 733 | 603 | 20 | 53–75 | ( 6) |
| 1e | – | – | | 72 | ( 8) |
| A | 652 | 619 | 26 | 30–71 | ( 1) |

**Patentansprüche**

**1.** Pfropfcopolymerisate, erhältlich durch

A) Emulsionspolymerisation von 5 bis 20 Gew.-% eines Monomerengemisches aus

$a_1$) 60-79 Gew.-% mindestens eines vinylaromatischen Monomeren

$a_2$) 21-40 Gew.-% mindestens eines ethylenisch ungesättigten Nitrils

$a_3$) 0-10 Gew.-% mindestens eines zwei- oder mehrfach ethylenisch ungesättigten Monomeren

$a_4$) 0-5 Gew.-% mindestens eines weiteren Monomeren,

B) anschließende Emulsionspolymerisation in Gegenwart des nach Stufe A) erhaltenen Emulsionspolymerisats von 50-75 Gew.-% eines Monomerengemisches aus

$b_1$) 75-100 Gew.-% mindestens eines konjugierten Diens

$b_2$) 0-25 Gew.-% mindestens eines vinylaromatischen Monomeren oder ungesättigten Nitrils

$b_3$) 0-10 Gew.-% mindestens eines zwei- oder mehrfach ethylenisch ungesättigten Monomeren mit mindestens zwei isolierten Doppelbindungen

$b_4$) 0-5 Gew.-% mindestens eines weiteren Monomeren,

C) anschließende Emulsionspolymerisation in Gegenwart des nach Stufe B) erhaltenen Emulsionspolymerisats von 5-45 Gew.-% eines Monomerengemisches aus

$c_1$) 40-80 Gew.-% mindestens eines vinylaromatischen Monomeren

$c_2$) 5-35 Gew.-% mindestens eines ethylenisch ungesättigten Nitrils

$c_3$) 0-35 Gew.-% mindestens eines $C_1$-$C_{18}$-Alkylmethacrylats

$c_4$) 0-10 Gew.-% mindestens eines zwei- oder mehrfach ethylenisch ungesättigten Monomeren

$c_5$) 0-25 Gew.-% mindestens eines $C_1$-$C_{18}$-Alkylacrylats und

D) anschließende Emulsionspolymerisation in Gegenwart des nach Stufe C) erhaltenen Emulsionspolymerisats von 0-5 Gew.-% eines Monomerengemisches aus

$d_1$) 60-100 Gew.-% mindestens eines $C_1$-$C_4$-Alkylmethacrylats

$d_2$) 0-5 Gew.-% mindestens eines zwei- oder mehrfach ethylenisch ungesättigten Monomeren,

$d_3$) 0-40 Gew.-% mindestens eines weiteren Monomeren

wobei sich die Gewichtsprozente der in den Stufen A) bis D) eingesetzten Monomerengemische auf das Pfropfcopolymerisat beziehen und sich auf 100 Gew.-% addieren.

**2.** Verfahren zur Herstellung von Pfropfcopolymerisaten gemäß Anspruch 1, dadurch gekennzeichnet, daß man es gemäß den dort genannten Maßnahmen durchführt.

**3.** Thermoplastische Formmassen, enthaltend 2-40 Gew.-% eines Pfropfcopolymerisats gemäß Anspruch 1.

**4.** Thermoplastische Formmassen, enthaltend

60-98 Gew.-% Polyvinylchlorid oder eines Vinylchloridcopolymeren mit mindestens 80 Gew.-% Vinylchlorideinheiten oder nachchloriertes Polyvinylchlorid und

2-40 Gew.-% eines Pfropfcopolymerisats gemäß Anspruch 1.

**5.** Formteile, hergestellt aus thermoplastischen Formmassen gemäß Anspruch 3 oder 4.

## Claims

**1.** A graft copolymer obtainable by

A) emulsion polymerization of from 5 to 20% by weight of a monomer mixture of

$a_1$) 60-79% by weight of one or more vinylaromatic monomers,

$a_2$) 21-40% by weight of one or more ethylenically unsaturated nitriles,

$a_3$) 0-10% by weight of one or more di- or polyethylenically unsaturated monomers and

$a_4$) 0-5% by weight of one or more further monomers,

B) subsequent emulsion polymerization, in the presence of the emulsion polymer obtained in stage A), of 50-75% by weight of a monomer mixture of

$b_1$) 75-100% by weight of one or more conjugated dienes,

$b_2$) 0-25% by weight of one or more vinylaromatic monomers or unsaturated nitriles,

$b_3$) 0-10% by weight of one or more di- or polyethylenically unsaturated monomers having at least two isolated double bonds and

$b_4$) 0-5% by weight of one or more further monomers,

C) subsequent emulsion polymerization, in the presence of the emulsion polymer obtained in stage B), of 5-45% by weight of a monomer mixture of

$c_1$) 40-80% by weight of one or more vinylaromatic monomers,

$c_2$) 5-35% by weight of one or more ethylenically unsaturated nitriles,

$c_3$) 0-35% by weight of one or more $C_1$-$C_{18}$-alkyl methacrylates,

$c_4$) 0-10% by weight of one or more di- or polyethylenically unsaturated monomers and

$c_5$) 0-25% by weight of one or more $C_1$-$C_{18}$-alkyl acrylates and

D) subsequent emulsion polymerization, in the presence of the emulsion polymer obtained in stage C), of 0-5% by weight of a monomer mixture of

$d_1$) 60-100% by weight of one or more $C_1$-$C_4$-alkyl methacrylates,

$d_2$) 0-5% by weight of one or more di- or polyethylenically unsaturated monomers and

$d_3$) 0-40% by weight of one or more further monomers,

the percentages by weight of the monomer mixtures used in stages A) to D) being based on the graft copolymer and summing to 100% by weight.

**2.** A process for the preparation of a graft copolymer as claimed in claim 1, which is carried out according to the measures stated there.

8

3. A thermoplastic molding material containing 2-40% by weight of a graft copolymer as claimed in claim 1.

4. A thermoplastic molding material containing
60-98% by weight of polyvinyl chloride or of a vinyl chloride copolymer having not less than 80% by weight of vinyl chloride units or postchlorinated polyvinyl chloride and
2-40% by weight of a graft copolymer as claimed in claim 1.

5. A molding produced from a thermoplastic molding material as claimed in claim 3 or 4.

**Revendications**

1. Copolymères greffés, que l'on peut obtenir
   A) par polymérisation en émulsion de 5 à 20 % en poids d'un mélange de monomères constitué :
      $a_1$) de 60 à 79 % en poids d'au moins un monomère vinylaromatique,
      $a_2$) de 21 à 40 % en poids d'au moins un nitrile à insaturation éthylénique,
      $a_3$) de 0 à 10 % en poids d'au moins un monomère ayant au moins deux insaturations éthyléniques,
      $a_4$) de 0 à 5 % en poids d'au moins un autre monomère,
   B) puis par polymérisation en émulsion, en présence du polymère obtenu dans l'étape A) par polymérisation en émulsion, de 50 à 75 % en poids d'un mélange de monomères constitué :
      $b_1$) de 75 à 100 % en poids d'au moins un diène conjugué,
      $b_2$) de 0 à 25 % en poids d'au moins un monomère vinylaromatique ou d'un nitrile insaturé,
      $b_3$) de 0 à 10 % en poids d'au moins un monomère ayant au moins deux insaturations éthyléniques, comportant au moins deux doubles liaisons isolées,
      $b_4$) de 0 à 5 % en poids d'au moins un autre monomère,
   C) puis par polymérisation en émulsion, en présence d'un polymère obtenu selon l'étape B) par polymérisation en émulsion, de 5 à 45 % en poids d'un mélange de monomères constitué
      $c_1$) de 40 à 80 % en poids d'au moins un monomère vinylaromatique,
      $c_2$) de 5 à 35 % en poids d'au moins un nitrile à insaturation éthylénique,
      $c_3$) de 0 à 35 % en poids d'au moins un méthacrylate d'alkyle en $C_1$-$C_{18}$,
      $c_4$) de 0 à 10 % en poids d'au moins un monomère ayant au moins deux insaturation éthyléniques,
      $c_5$) de 0 à 25 % en poids d'au moins un acrylate d'alkyle en $C_1$-$C_{18}$, et
   D) puis par polymérisation en émulsion, en présence du polymère obtenu dans l'étape C) par polymérisation en émulsion, de 0 à 5 % en poids d'un mélange de monomères constitué
      $d_1$) de 60 à 100 % en poids d'au moins un méthacrylate d'alkyle en $C_1$-$C_4$,
      $d_2$) de 0 à 5 % en poids d'au moins un monomère ayant au moins deux insaturations éthyléniques,
      $d_3$) de 0 à 40 % en poids d'au moins un autre monomère,
   les pourcentages en poids des mélanges de monomères utilisés dans les étapes A) à D) se rapportant au copolymère greffé, leur somme étant égale à 100 % en poids.

2. Procédé pour préparer des copolymères greffés selon la revendication 1, caractérisé en ce qu'il est mis en oeuvre selon les conditions opératoires qui y sont indiquées.

3. Mélanges à mouler thermoplastiques contenant de 2 à 40 % en poids d'un copolymère greffé selon la revendication 1.

4. Mélanges à mouler thermoplastiques contenant 60 à 98 % en poids de poly(chlorure de vinyle) ou d'un copolymère du chlorure de vinyle contenant au moins 80 % en poids de motifs chlorure de vinyle ou de poly(chlorure de vinyle) surchloré, et
   2 à 40 % en poids d'un copolymère greffé selon la revendication 1.

5. Objets moulés fabriqués à partir de mélanges à mouler thermoplastiques selon la revendication 3 ou 4.